# EUROPÄISCHE PATENTSCHRIFT

(11) **EP 1 302 372 B1**
(45) Veröffentlichungstag und Bekanntmachung des Hinweises auf die Patenterteilung: **24.05.2006**
(21) Anmeldenummer: 02022909.2
(22) Anmeldetag: 10.10.2002
(51) Int. Cl.: B60R 21/01

(54) **Fahrzeuglenkvorrichtung**
Vehicle steering system
Dispositif de direction de véhicule

(30) Priorität: 10.10.2001 DE 20116618 U
(43) Veröffentlichungstag der Anmeldung: 16.04.2003
(73) Patentinhaber: TRW Automotive Safety Systems GmbH, 63743 Aschaffenburg (DE)
(72) Erfinder: Keutz, Markus, 64380 Rossdorf (DE)
(74) Vertreter: Kitzhofer, Thomas

(56) Entgegenhaltungen:
- DE-A- 19 900 735
- DE-C- 4 414 216
- DE-U- 20 105 002
- US-A- 6 049 747
- US-B1- 6 254 127

## Beschreibung

Die Erfindung betrifft ein Fahrzeuglenksystem mit einem Lenkradgemäß dem Oberbegriff des Anspruchs 1.

Es ist für viele Zwecke sinnvoll, Daten über Fahrzeuginsassen, besonders den Fahrer des Fahrzeugs, zu erfassen und auszuwerten, sei es zur Verbesserung der Sicherheit des Fahrzeuginsassen oder zur Erhöhung dessen Komforts.

Die gattungsgemäße US-B-6 254 127 stellt ein System vor, bei dem ein in der Abdeckkappe eines Gassackmodul angeordneter Sensor zur Bestimmung der Position des Fahrers eingesetzt wird. Bei dem Sensor kann es sich z.B. um eine CCD-Kamera handeln.

Es ist auch möglich, berührungslos arbeitende Sensoren zu anderen Zwecken zu verwenden. In der DE-C-44 14 216 wird vorgeschlagen, eine bildanalysierende Fahrererkennung aus Kameradaten vorzunehmen, um eine Wegfahrsperre auszuschalten oder Spiegel bzw. Luftdüsen individuell einzustellen.

Nach der US-A-6 049 747 wird dem Fahrer ein Warnsignal gegeben, falls eine Elektronik über eine Kamera erkennt, daß dieser unaufmerksam ist oder einzuschlafen droht.

Bei dem in der DE-U-201 05 002 gezeigten Lenkrad ist zentral eine Anzeige- und Bedienvorrichtung vorgesehen. Eine Austrittsöffnung für eine Gassack verläuft ringförmig um diese Einheit, so daß diese stationär am Lenkrad verbleibt, wenn sich der Gassack entfaltet.

Die Erfindung schafft eine einfache Möglichkeit, derartige Daten zu erfassen. Dies wird bei einem oben genannten Fahrzeuglenksystem durch die Merkmale des Anspruchs 1 erreicht. Die Positionierung eines solchen Sensors im Lenkrad ist besonders günstig, da zwischen Fahrer und Lenkrad normalerweise ein freier Sichtweg besteht, so daß der Sensor nicht unabsichtlich verdeckt wird.

Der Sensor ist eine Kamera, vorteilhaft eine Digitalkamera, die bevorzugt auf den Fahrer gerichtet ist. Die Kamera ist mit einer Elektronikeinheit verbunden. So lassen sich z.B. auch der Abstand des Fahrers vom Lenkrad sowie dessen aktuelle Körperhaltung bestimmen, was zur Festlegung der Entfaltungsparameter eines Gassacks vorteilhaft ist.

Die Kamera und die Elektronikeinheit sind so ausgelegt, daß ein Bild des Fahrers aufgenommen, ausgewertet und mit einem abgespeicherten Datensatz verglichen und darüber die Identität des Fahrers bestimmt werden kann.

Die Identitätserkennung wird erfindungsgemäß dazu eingesetzt die Voreinstellung von Auslöseparameter für Sicherheitseinrichtungen einzustellen. Das Fahrzeug und die Elektronikeinheit sind entsprechend ausgelegt. Denkbar wäre and die zusätzliche Einstellung der Sitz- und Spiegelpositionen oder die Vorwahl bestimmter Radiosender oder eines bestimmten Telefonadressbuchs, um nur einige Beispiele zu nennen.

Diese Identitätserkennung ist z.B. auch nützlich, wenn die Elektronikeinheit mit einer Wegfahrsperre verbunden ist, wobei die Elektronikeinheit so ausgelegt ist, daß sie die Wegfahrsperre so ansprechen kann, daß eine Benutzung des Fahrzeugs unterbunden werden kann, falls die Identität des Fahrers nicht mit einem gespeicherten Datensatz übereinstimmt. Selbstverständlich kann die Benutzung des Fahrzeugs auch für verschiedene Personen freigegeben sein.

Die Kamera kann bei entsprechenden Auslegung der Elektronikeinheit auch dazu verwendet werden, Daten aufzunehmen und auszuwerten, die eine Aussage über die Fitneß des Fahrers, d.h. dessen Aufmerksamkeit oder Fahrtüchtigkeit, erlauben. Hierzu können z.B. Lidstellung oder Lidbewegungen, die Häufigkeit eines Gähnens oder Augenbewegungen ausgewertet werden. Wird durch die Elektronikeinheit festgestellt, daß die Fitneß oder Aufmerksamkeit des Fahrers nachläßt, wird dieser bevorzugt durch ein Signal einer mit der Elektronikeinheit verbundenen Signalvorrichtung optisch und/oder akustisch alarmiert. Eine derartige Überwachung ließe sich auch darauf ausdehnen, bei einer plötzlichen Verschlechterung des Gesundheitszustands des Fahrers (gekennzeichnet etwa durch einen Zusammenbruch) das Fahrzeug zu stoppen und einen Notruf zu tätigen.

Vorzugsweise weist das Lenkrad ein Gassackmodul mit einem Gassack und eine frontseitigen Abdeckkappe auf, die eine Austrittsöffnung für den Gassack bis zu dessen Entfaltung verschließt, wobei der Sensor in der Abdeckkappe angeordnet ist und die Austrittsöffnung um den Sensor herum verläuft. Zusätzlich kann in der Abdeckkappe eine Anzeige- und/oder Bedienvorrichtung angeordnet sein, wobei die Austrittsöffnung für den Gassack um die Anzeige- und/oder Bedienvorrichtung herum verläuft. Da die Austrittsöffnung um den Sensor bzw. die Anzeige- und/oder Bedienvorrichtung herum verläuft, bleiben diese Bauteile stationär am Lenker befestigt, selbst wenn die Abdeckkappe aufreißt. Für die Signalübertragung stehen Vorrichtungen zur Verfügung, die bereits im Zusammenhang mit Multifunktionsschaltern und auch im Zusammenhang mit der Gasgeneratorauslösung entwickelt wurden. Die Montage des Lenkrades selbst ist sehr einfach, und es kann auch leicht demontiert werden, was ein erheblicher Vorteil gegenüber der Demontage von Sensoren bzw. Anzeige- und/oder Bedienvorrichtungen, die in der Instrumententafel angeordnet sind, ist. Die Abdeckkappe kann eine zentrische Vertiefung oder Öffnung zur Unterbringung der entsprechenden Bauteile haben.

Die Austrittsöffnung hat insbesondere eine geschlossene Ringform. Der Gassack tritt also in symmetrischer Form und zentrisch, d.h. im Bereich der Nabe, aus dem Gassackmodul heraus in Richtung Insassen.

Vorzugsweise ist auch der Gassack ringförmig ausgeführt und bewegt sich über die Austrittsöffnung nach außen. Der Gassack umgibt somit im entfalteten Zustand den Sensor bzw. die Anzeige- und/oder Bedienvorrichtung, die beim Entfalten des Gassackes stationär am Lenkrad befestigt bleiben. Der Gassack kann an seiner Frontwand radial einwärts zusammenschlagen, so daß die Einbuchtung von außen nicht offen ist.

Gemäß einer Ausführungsform ist die Anzeige- und/oder Bedienvorrichtung ein Bildschirm zur Anzeige verschiedener Fahrzeugdaten. Der Bildschirm wird also universell verwendet und dient beispielsweise der Geschwindigkeitsanzeige, der Anzeige eines Navigationssystems, der Radioanzeige, der Telefonanzeige, als WAP-Bildschirm, als PC-Display, als Bildschirm zur Versendung/Ansicht von Emails oder auch, vorzugsweise in Verbindung mit einem als Kamera ausgebildeten Sensor, zur Darstellung von Videodaten für ein Bildtelefon. Die Anzeige- und/oder Bedienvorrichtung kann auch als Touch-Screen zur kombinierten Anzeige und Bedienung einer Einrichtung oder als Touch Pad zur Bedienung von Fahrzeugelementen ausgelegt sein.

Weitere Merkmale und Vorteile der Erfindung ergeben sich aus der nachfolgenden Beschreibung und aus der nachfolgenden Zeichnung, auf die Bezug genommen wird.
- Figur 1 zeigt eine Draufsicht auf ein erfindungsgemäßes Lenksystem,
- Figur 2 zeigt einen Schnitt durch das in Figur 1 gezeigte Lenksystem mit entfaltetem Gassack, und
- Figur 3 zeigt eine schematische Ansicht eines Fahrzeuginnenraums mit einem erfindungsgemäßen Lenksystem.

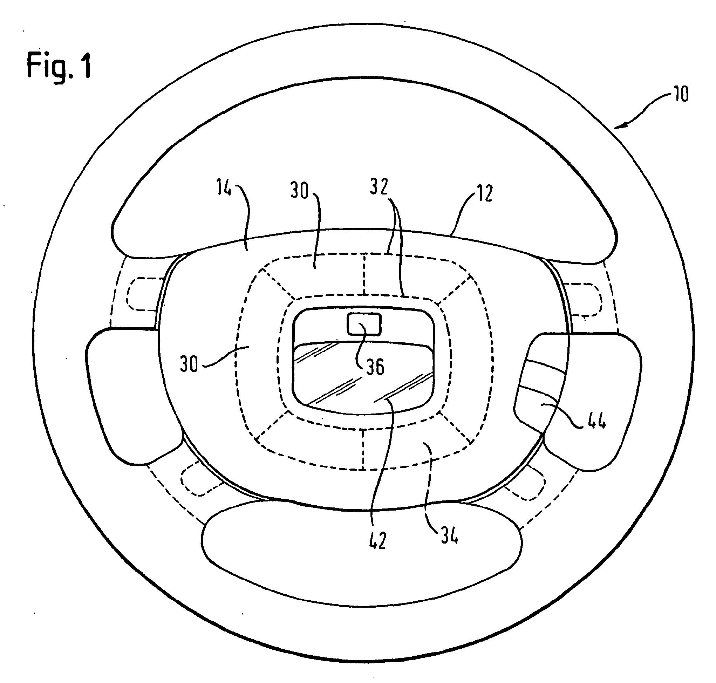

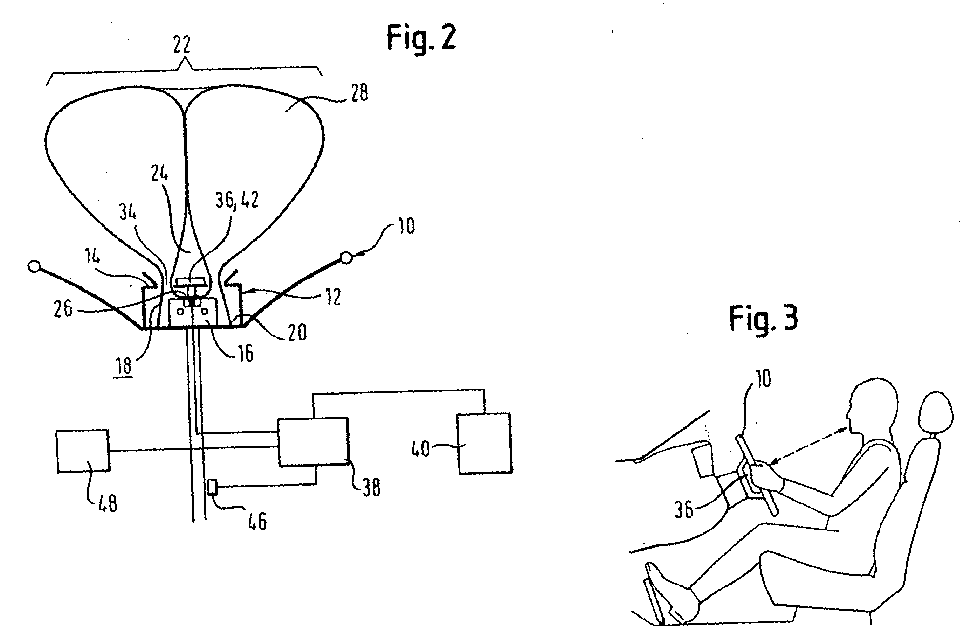

Figur 1 zeigt ein Fahrzeuglenksystem mit einem Lenkrad 10, in dem ein Gassackmodul 12 im Bereich der Nabe untergebracht ist. Das Gassackmodul hat eine frontseitige Abdeckkappe 14 im Bereich der Nabe, einen Gasgenerator 16 und einen Gassack 18. Der Gassack ist an seinem äußeren Rand 20 am Boden des Gassackmoduls 12 befestigt. Bezogen auf den entfalteten Zustand (siehe Figur 2) besitzt der Gassack eine Frontwand 22, auf die der Insasse auftrifft. Die Frontwand 22 geht in eine Einbuchtung 24 über, die dadurch gebildet ist, daß ein zentrischer Abschnitt der Gassackwand über eine Befestigungsvorrichtung 26 am Gasgenerator 16 befestigt bleibt und somit an einem Austritt aus dem Gassackmodul 12 gehindert ist. Der Gassack hat damit im aufgeblasenen Zustand eine ringförmige Gestalt mit einer ringförmigen Kammer 28.

Die Abdeckkappe 14 hat zahlreiche Klappen 30, die durch vorgegebene Folienscharniere und Sollbruchlinien 32 definiert sind. Diese Klappen 30 schließen eine geschlossen ringförmige Austrittsöffnung 34 für den Gassack 18. Die Austrittsöffnung 34 umgibt einen zentrisch in der Abdeckkappe 14 vorgesehenen Sensor 36, der als Kamera ausgebildet ist. Der Sensor überträgt seine Daten an eine Elektronikeinheit 38.

Der Sensor ist auf den Fahrer des Fahrzeugs gerichtet (siehe Figur 3), so daß er auf diesen bezogene Daten erfassen kann. So können z.B. die aktuelle Distanz zwischen Lenkrad und Kopf oder Brustkorb des Fahrers, aber auch die exakte Position und Körperhaltung des Fahrers erfaßt werden. Diese Daten werden bevorzugt verwendet, um auf bekannte Weise die Parameter einer Entfaltung des Gassacks wie z.B. dessen Aufblashärte festzulegen, um einen optimalen Schutz für den Fahrer erzielen zu können. Bevorzugt werden die Parameter in kurzen Zeitabständen aktualisiert.

Außerdem kann auch der Wachheitsgrad des Fahrers z.B. über eine Auswertung der Lidbewegungen überwacht werden, um ihn gegebenenfalls durch ein von einer Signalvorrichtung 48 erzeugtes akustisches und/oder optisches Signal am Einschlafen zu hindern.

Über die von dem als Digitalkamera ausgebildeten Sensor 36 an die Elektronikeinheit 38 übertragenen Daten läßt sich die Identität des Fahrers bestimmen. Hierzu sind bevorzugt ein oder mehrere Datensätze in der Elektronikeinheit 38 abgespeichert, die zur Identifizierung herangezogen werden. In Abhängigkeit der Identität kann vorgesehen sein, gemäß eines gespeicherten Profils festgelegte Fahrzeugparameter einzustellen, wie z.B. die Stellung des Fahrzeugsitzes oder der Spiegel.

Es ist auch möglich, über die Elektronikeinheit 38 eine Wegfahrsperre 40 anzusprechen, um ein unbefugtes Benutzen des Fahrzeugs zu verhindern, wenn die Identität des Fahrers nicht einem gespeicherten Profil entspricht.

In der Abdeckkappe 14 ist außerdem eine Anzeige- und/oder Bedienvorrichtung 42, hier in Form eines LCD-Bildschirms, vorgesehen, der, abhängig von der gewünschten Einstellung, wenigstens eine der folgenden Funktionen hat: Geschwindigkeitsanzeige, Anzeige eines Navigationssystems, Radioanzeige, Telefonanzeige, WAP-Bildschirm (Abrufen/Versenden von Emails), PC-Display, Videodarstellung für ein Bildtelefon und dergleichen. Auch die übrigen bislang bereits im Fahrzeug vorgesehenen Anzeigen können über den LCD-Bildschirm erfolgen.

Die Anzeige- und/oder Bedienvorrichtung 42 ist über die Befestigungseinrichtung 26 ebenfalls bleibend am Gassackmodul 12 befestigt, so daß sie beim Entfalten des Gassacks 18 und Aufreißen der Abdeckkappe 14 stationär am Lenkrad 10 befestigt bleibt. Über am Lenkrad angeordnete Multifunktionsschalter 44 können darüber hinaus unterschiedliche Informationen abgefragt und am Bildschirm angezeigt werden. Die Anzeige- und/oder Bedienvorrichtung ist ebenfalls mit der Elektronikeinheit 38 gekoppelt, die wiederum mit einem Sensor 46 zur Erfassung des Lenkwinkeleinschlags verbunden ist. In die Elektronikeinheit 38 gehen darüber hinaus auch noch die übrigen Daten ein, die auf der Anzeige angezeigt werden. Die Elektronikeinheit 38 steuert die Anzeige- und/oder Bedienvorrichtung 42 dergestalt, daß unabhängig vom Lenkwinkel die Anzeige immer horizontal ausgerichtet ist. Wird das Lenkrad 10 gedreht, so wird die Anzeige elektronisch um den gleichen Winkel in die Gegenrichtung "gedreht", so daß trotz Kurvenfahrt die Anzeige horizontal steht.

Die Bedien- und/oder Anzeigevorrichtung 42 kann auch einen Touch-Screen enthalten, der eine kombinierte Anzeige- und Bedienvorrichtung darstellt. Es sind mehrere Felder mit Anzeigen vorgesehen, die bei Berührung anwählbar sind, so daß ein Menü geöffnet wird. Beispielsweise kann über das Feld "Telefon" der gesamte Bildschirm zur Darstellung des Telefonbuches verwendet werden, so daß sehr schnell auf einzelne Einträge zugegriffen werden kann. Über das Feld "Radio" lassen sich Funktionen wie Lautstärke oder gewählte Frequenz verändern.

Die Anzeige- und/oder Bedienvorrichtung 42 kann auch ein reines Bedienelement in Form eines Touch Pads enthalten. Über dieses Bedienfeld kann der Fahrer beispielsweise im Stillstand des Fahrzeugs einen Zeiger auf einem anderweitig angeordneten Bildschirm schnell bewegen und durch Drücken des Touch Pads Funktionen wählen. Beispielsweise könnte auf die Windschutzscheibe eine Anzeige projiziert werden, die über den Touch Pad verändert werden kann, indem Funktionen oder Menüs angewählt werden.

Auch eine Kombination von Bedienelementen und Anzeigevorrichtungen im Zentrum der Abdeckkappe 14 ist möglich.

Gemäß der bevorzugten Ausführungsformen ist die Austrittsöffnung 34 immer in einer geschlossenen Ringform ausgebildet. Jedoch ist auch eine offene Ringform möglich, z.B. eine Austrittsöffnung 34 in Form eines "U".

## Patentansprüche

1. Fahrzeuglenksystem
mit einem Lenkrad
einer Elektronikeinheit (38) und
einem am Lenkrad (10) angeordneten, als auf einen Fahrer des Fahrzeugs gerichtete Kamera ausgebildeten Sensor (36), der so ausgelegt ist, daß er auf einen Fahrer des Fahrzeugs bezogene Daten berührungslos erfassen kann,
wobei die Kamera mit der Elektronikeinheit (38) verbunden ist, und die Elektronikeinheit (38) die Signale der Kamera auswerten kann,
**dadurch gekennzeichnet daß** die Kamera und die Elektronikeinheit (38) so ausgelegt sind, daß ein Bild des Fahrers aufgenommen, ausgewertet, mit einem abgespeicherten Datensatz verglichen und darüber die Identität des Fahrers bestimmt wird und
in Abhängigkeit von der Identität des Fahrers Voreinstellungen von Auslöseparametern von Sicherheitseinrichtungen vorgenommen werden.

2. Fahrzeuglenksystem nach Anspruch 1, **dadurch gekennzeichnet, daß** die Elektronikeinheit (38) mit einer Wegfahrsperre (40) verbunden ist und daß die Elektronikeinheit (38) so ausgelegt ist, daß sie die Wegfahrsperre (40) so anspricht, daß eine Benutzung des Fahrzeugs unterbunden ist, falls die Identität des Fahrers nicht mit einem gespeicherten Datensatz übereinstimmt.

3. Fahrzeuglenksystem nach einem der vorhergehenden Ansprüche, **dadurch gekennzeichnet, daß** die Kamera und die Elektronikeinheit (38) so ausgelegt sind, daß Daten, die eine Aussage über die Fitneß des Fahrers erlauben, aufgenommen und ausgewertet werden.

4. Fahrzeuglenksystem nach Anspruch 3, **dadurch gekennzeichnet, daß** in Abhängigkeit der erfaßten Daten eine Signalvorrichtung (48) ausgelöst wird.

5. Fahrzeuglenksystem nach einem der vorhergehenden Ansprüche, **dadurch gekennzeichnet, daß** das Lenkrad (10) ein Gassackmodul (12) mit einem Gassack (28) und eine frontseitigen Abdeckkappe (14) aufweist, die eine Austrittsöffnung (34) für den Gassack (28) bis zu dessen Entfaltung verschließt, wobei der Sensor (36) in der Abdeckkappe (14) angeordnet ist und die Austrittsöffnung (34) um den Sensor herum verläuft.

6. Fahrzeuglenksystem nach Anspruch 5, **dadurch gekennzeichnet, daß** eine Anzeige- und/oder Bedienvorrichtung (42) in der Abdeckkappe vorgesehen ist.

7. Fahrzeuglenksystem nach einem der Ansprüche 5 und 6, **dadurch gekennzeichnet, daß** die Austrittsöffnung (34) eine geschlossene Ringform hat.

8. Fahrzeuglenksystem nach einem der Ansprüche 5 bis 7, **dadurch gekennzeichnet, daß** der Gassack (28) ringförmig ausgebildet ist und sich über die Austrittsöffnung (34) nach außen bewegen kann.

9. Fahrzeuglenksystem nach einem der Ansprüche 5 bis 8, **dadurch gekennzeichnet, daß** der Sensor (36) beim Entfalten des Gassacks (28) stationär am Lenkrad (10) befestigt bleibt.

10. Fahrzeuglenksystem nach einem der Ansprüche 5 bis 9, **dadurch gekennzeichnet, daß** der Gassack (28) eine Frontwand (22), auf die ein Insasse prallen kann, aufweist, die eine zentrische, bis zum Sensor (36) verlaufende Einbuchtung (24) hat.

11. Fahrzeuglenksystem nach einem der vorhergehenden Ansprüche, **dadurch gekennzeichnet, daß** über die Identitätserkennung eine Vorwahl bestimmter Radiosender oder eines bestimmten Telefonadreßbuchs erfolgt.

## Claims

1. A vehicle steering system comprising
a steering wheel,
an electronic unit (38), and
a sensor (36) which is disposed at the steering wheel (10), is in the form of a camera directed at a driver of the vehicle, and is adapted for non-contact acquisition of data related to a driver of the vehicle,
the camera being connected with the electronic unit (38), and the electronic unit (38) being adapted to evaluate the signals of the camera,
**characterized in that** the camera and the electronic unit (38) are designed such that a picture of the driver is taken, evaluated, compared with a stored set of data and, by means of this, the identity of the driver is determined, and
parameters for the activation of safety devices can be preset depending on the identity of the driver.

2. The vehicle steering system as claimed in claim 1, **characterized in that** the electronic unit (38) is connected with an immobilizer system (40) and that the electronic unit (38) is designed such that it addresses the immobilizer system (40) such that utilization of the vehicle is prevented if the identity of the driver is not in agreement with a stored set of data.

3. The vehicle steering system as claimed in either of the preceding claims, **characterized in that** the camera and the electronic unit (38) are designed such that data is recorded and evaluated that allows to make a statement about the physical fitness of the driver.

4. The vehicle steering system as claimed in claim 3, **characterized in that** a signal device (48) is activated in dependence on the data acquired.

5. The vehicle steering system as claimed in any of the preceding claims, **characterized in that** the steering wheel (10) includes a gas bag module (12) having a gas bag (28) and a front-side covering cap (14) which closes an outlet opening (34) for the gas bag (28) until deployment thereof, the sensor (36) being arranged in the covering cap (14) and the outlet opening (34) extending around the sensor.

6. The vehicle steering system as claimed in claim 5, **characterized in that** a display and/or operating device (42) is provided in the covering cap.

7. The vehicle steering system as claimed in either of claims 5 and 6, **characterized in that** the outlet opening (34) has a closed annular shape.

8. The vehicle steering system as claimed in any of claims 5 to 7, **characterized in that** the gas bag (28) is formed to be ring-shaped and can move to the outside via the outlet opening (34).

9. The vehicle steering system as claimed in any of claims 5 to 8, **characterized in that** the sensor (36) remains stationarily attached to the steering wheel (10) when the gas bag (28) is deployed.

10. The vehicle steering system as claimed in any of claims 5 to 9, **characterized in that** the gas bag (28) has a front wall (22) for impact thereon by an occupant, the front wall (22) having a centric indentation (24) extending as far as to the sensor (36).

11. The vehicle steering system as claimed in any of the preceding claims, **characterized in that** the identity recognition is used to preselect specific radio stations or a particular telephone directory.

## Revendications

1. Système de direction de véhicule,
comportant un volant de direction,
une unité électronique (38) et
un capteur (36) agencé sur le volant de direction (10) et réalisé sous forme de caméra dirigée sur un conducteur du véhicule, capteur qui est conçu de telle sorte qu'il peut détecter sans contact des données concernant un conducteur du véhicule,
la caméra étant reliée à l'unité électronique (38), et l'unité électronique (38) pouvant évaluer les signaux de la caméra,
**caractérisé en ce que** la caméra et l'unité électronique (38) sont conçues de telle sorte qu'une photographie du conducteur est prise, évaluée, comparée à un jeu de données mémorisées et qu'au moyen de celle-ci, l'identité du conducteur est déterminée, et
des réglages préalables de paramètres de déclenchement de dispositifs de sécurité sont effectués en fonction de l'identité du conducteur.

2. Système de direction de véhicule, **caractérisé en ce que** l'unité électronique (38) est reliée à un système d'immobilisation (40) et **en ce que** l'unité électronique (38) est conçu de manière à déclencher système d'immobilisation (40) de telle sorte qu'une utilisation du véhicule est empêchée dans le cas où l'identité du conducteur ne coïncide pas avec un jeu de données mémorisées.

3. Système de direction de véhicule selon l'une des revendications précédentes, **caractérisé en ce que** la caméra et l'unité électronique (38) sont conçues de telle sorte que des données qui permettent de faire une constatation sur l'état physique du conducteur, sont enregistrées et évaluées.

4. Système de direction de véhicule selon la revendication 3, **caractérisé en ce qu'**un dispositif de signal (48) est déclenché en fonction des données détectées.

5. Système de direction de véhicule selon l'une des revendications précédentes, **caractérisé en ce que** le volant de direction (10) présente un module de coussin à gaz (12) avec un coussin à gaz (28) et un couvercle (14) frontal, qui ferme une ouverture de sortie (34) pour le coussin à gaz (28) jusqu'à son déploiement, le capteur (36) étant agencé dans le couvercle (14) et l'ouverture de sortie (34) s'étendant autour du capteur.

6. Système de direction de véhicule selon la revendication 5, **caractérisé en ce qu'**il est prévu un dispositif d'affichage et/ou de manoeuvre (42) dans le couvercle.

7. Système de direction de véhicule selon l'une des revendications 5 et 6, **caractérisé en ce que** l'ouverture de sortie (34) a une forme annulaire fermée.

8. Système de direction de véhicule selon l'une des revendications 5 à 7, **caractérisé en ce que** le coussin à gaz (28) est réalisé de forme annulaire et peut se déplacer vers l'extérieure via l'ouverture de sortie (34).

9. Système de direction de véhicule selon l'une des revendications 5 à 8, **caractérisé en ce que** le capteur (36) reste fixé de manière stationnaire lorsque le coussin à gaz (28) se déploie.

10. Système de direction de véhicule selon l'une des revendications 5à 9, **caractérisé en ce que** le coussin à gaz (28) présente une paroi frontale sur laquelle un occupant peut heurter et qui a un creux central s'étendant jusqu'au capteur (36).

11. Système de direction de véhicule selon l'une des revendications précédentes, **caractérisé en ce que** via la reconnaissance d'identité a lieu une présélection de stations de radio déterminées ou d'un livre d'adresses de téléphone déterminé.
